# EUROPÄISCHE PATENTSCHRIFT

(11) **EP 2 637 758 B1**
(45) Veröffentlichungstag und Bekanntmachung des Hinweises auf die Patenterteilung: **17.01.2018**
(21) Anmeldenummer: 11788395.9
(22) Anmeldetag: 08.11.2011
(51) Int. Cl.: B01D 9/00, B01D 53/14, B01D 53/96, C01B 17/56

(54) **AUFBEREITUNG EINES AMINBASIERTEN, DURCH DEN EINTRAG VON SCHWEFELOXIDEN VERUNREINIGTEN LÖSUNGSMITTELS**
PREPARATION OF AN AMINE BASED SOLVENT CONTAMINATED BY THE INTRODUCTION OF SULFUR OXIDES
TRAITEMENT D'UN SOLVANT À BASE AMINE CONTAMINÉ PAR L'INTRODUCTION D'OXYDES DE SOUFRE

(30) Priorität: 10.11.2010 DE 102010043689
(43) Veröffentlichungstag der Anmeldung: 18.09.2013
(73) Patentinhaber: Siemens Aktiengesellschaft, 80333 München (DE)
(72) Erfinder: FORBERT, Rainald, 85368 Moosburg (DE); HAUKE, Stefan, 64683 Einhausen (DE); JOH, Ralph, 63500 Seligenstadt (DE); OLSCHEWSKI, Frank, 65934 Frankfurt (DE); SCHNEIDER, Rüdiger, 65817 Eppstein (DE)
(86) Internationale Anmeldenummer: PCT/EP2011/069593
(87) Internationale Veröffentlichungsnummer: WO 2012/062724

(56) Entgegenhaltungen:
- DE-A1- 2 702 583
- US-A- 4 389 383
- US-A- 4 500 500
- US-A- 5 912 387
- US-A1- 2004 253 159

## Beschreibung

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid dabei mit einem Absorptionsmittel aus dem Rauchgas herausgewaschen.

Gebräuchliche chemische Absorptionsmittel, wie beispielsweise Monoethanolamin (MEA), zeigen eine gute Selektivität und eine hohe Kapazität für Kohlendioxid CO₂. Amin-Lösungen als Waschmittel binden jedoch auch irreversibel saure Rauchgasnebenkomponenten wie Stickstoffdioxid NO₂ und Schwefeldioxid SO₂ oder Schwefeltrioxid SO₃ in Form von Sulfit und Sulfat und beeinträchtigen dadurch im Laufe des Prozesses zunehmend die Wirksamkeit des Waschmittels. Die Bildung von Sulfit und Sulfat erfolgt unter den in aminbasierten Lösungsmitteln gegebenen alkalischen Bedingungen gemäß folgender Reaktionsgleichungen:

SO₂ + 2 OH⁻ → SO₃²⁻ + H₂O

SO₃ + 2 OH⁻ → SO₄²⁻ + H₂O

Um dem Problem der Anreicherung von Sulfit und Sulfat zu begegnen, besteht bei Amin-Lösungen die Möglichkeit einer Aufbereitung durch Destillation. Dabei wird die Amin-Lösung erwärmt, sodass die leicht flüchtigen Amine verdampfen und durch Kondensation zurück gewonnen und dadurch von den schwer siedenden Verunreinigungen abgetrennt werden.

Der merkliche Dampfdruck der gelösten Amine kann zwar einerseits für die destillative Aufreinigung ausgenutzt werden, andererseits führt er während des eigentlichen Reinigungsprozesses durch den Kontakt mit dem heißen Rauchgas dazu, dass Amine in kleinen Mengen mit dem gereinigten Rauchgas in die Umwelt ausgetragen werden, was zu unerwünschten Luftbelastungen führen kann. Destillative Reinigungsverfahren erfordern zudem einen hohen Energieaufwand, und pro Mol abgetrenntem Sulfit bzw. Sulfat verbleiben zwei Mol der aktiven Substanz im Rückstand, welcher weiter aufgearbeitet oder entsorgt werden muss.

Daher eignen sich z.B. Aminosäuresalze in dieser Hinsicht besonders für eine CO₂-Rauchgaswäsche, da Aminosäuresalzlösungen keinen messbaren Dampfdruck zeigen und daher auch nicht mit dem Rauchgas ausgetragen werden können. Allerdings ist bei Aminosäuresalzlösungen aus diesem Grund auch keine destillative Aufarbeitung möglich. Um eine Blockierung der Aminosäuresalze durch die sauren Rauchgasbestandteile zu verhindern ist daher eine sehr aufwendige Rauchgasfeinreinigung (Polishing) notwendig um Schwefeloxide SOₓ möglichst vollständig aus dem Rauchgas zu entfernen. Diese Verfahren sind sehr kostenintensiv im Hinblick auf Investitions- und Betriebskosten.

Somit stellt es sich als technisch wünschenswert dar, ein Verfahren zum Aufbereiten eines aminbasierten, durch den Eintrag von Schwefeloxiden verunreinigten Lösungsmittels anzugeben, bei dem einerseits die waschaktiven Substanzen weitgehend vollständig in Lösung bleiben, und das mit im Vergleich zu destillativen Reinigungsverfahren einem wesentlich reduzierten Energiebedarf und minimalen Rückständen ein weitgehend von Sulfit und Sulfat befreites Lösungsmittel liefert.

Ein Lösungsansatz diesbezüglich wird in den beiden Dokumenten US 2004/0253159A1 und US 4,389,393 beschrieben. Dort wird die temperaturunterstützte Ausfällung von Sulfat beschrieben, wobei Sulfat aus einer wässrigen Aminlösung durch die Zugabe von Hydroxiden bzw. Carbonaten bei Temperaturabsenkung erreicht wird.

Nachteilig an einer solchen Vorgehensweise ist jedoch, dass die Ausfällung spezifisch für Sulfat ist. Andere Schwefeloxide werden von diesem Verfahren nicht mit erfasst. Gerade aber bei einer Rauchgaswäsche fallen in einer Aminlösung als Waschlösung zahlreiche andere Schwefeloxide an, die ebenfalls mit entfernt werden sollten. Insbesondere trifft dies auf das weit verbreitete Schwefeldioxid zu, welches in Lösung als Sulfit vorliegt.

Folglich stellt es sich als Erfindungsaufgabe dar, ein Verfahren zur Aufbereitung eines durch den Eintrag von Schwefeloxiden verunreinigten Lösungsmittels vorzuschlagen, welches diese Nachteile des Standes der Technik vermeidet. Insbesondere soll die erfindungsgemäße Lösung ermöglichen, auch Sulfit aus der Lösung auszuscheiden.

Gelöst wird die Aufgabe der Erfindung durch die Merkmale des Verfahrenanspruchs 1. Dabei wird zunächst in das verunreinigte Lösungsmittel eine Kaliumverbindung eingebracht, und das verunreinigte Lösungsmittels auf eine Temperatur T abgekühlt, sodass die Löslichkeit des Kaliumsulfats geringer wird, als die gegebene Konzentration des Kaliumsulfats. Das Kaliumsulfat wird abfiltriert, wobei ein aufbereitetes Lösungsmittel gebildet wird. Weiter wird in das verunreinigte Lösungsmittel ein Oxidationsmittel eingebracht, sodass das Sulfit zu Sulfat oxidiert wird.

Das Verfahren dient insbesondere der Aufbereitung eines im Wesentlichen durch den Eintrag von Schwefeloxiden verunreinigten Lösungsmittels, das zur CO₂-Rauchgaswäsche in einem Kohlendioxid-Abscheideprozess zum Einsatz kommt. Derartige Abscheideprozesse für Kohlendioxid CO₂ sind dabei integraler Bestandteil einer Rauchgasreinigung bei fossil befeuerten Kraftwerksanlagen.

Die Erfindung geht dabei insbesondere von der Überlegung aus, ein mit Sulfit und Sulfat verunreinigtes Lösungsmittel durch selektive Kristallisation aufzubereiten.

In dem erfindungsgemäßen Verfahren wird das Sulfat durch Abkühlung des Lösungsmittels und die Zugabe einer Kaliumverbindung als Kaliumsulfat ausgefällt, indem die Konzentration des Kaliumsulfats auf Werte oberhalb der Kaliumsulfat-Löslichkeit gebracht wird. In einem folgenden oder parallelen Schritt wird das Kaliumsulfat abfiltriert, sodass ein aufbereitetes Lösungsmittel entsteht.

Die Erfindung macht sich dabei die niedrige Löslichkeit des Kaliumsulfats in aminbasierten Lösungsmitteln zu nutze, die eine Abscheidung des Kaliumsulfats durch eine Temperaturabsenkung ermöglicht. Vorzugsweise wird das verunreinigte Lösungsmittel dabei auf eine Temperatur T zwischen 5°C und 45°C abgekühlt bzw. eingestellt.

Neben Sulfat ist das Lösungsmittel aber auch mit Sulfit belastet, welches im Vergleich zu Sulfat recht gut löslich ist und nicht einfach durch Absenken der Temperatur in einem gewünschten Bereich auskristallisiert. Daher sieht das erfindungsgemäße Verfahren zusätzlich noch vor, dass in das verunreinigte Lösungsmittel ein Oxidationsmittel eingebracht wird, sodass das Sulfit zu Sulfat oxidiert wird.

Durch das Einbringen der Kaliumverbindung und des Oxidationsmittels können Verteilungsgradienten und lokale Überkonzentrierungen entstehen, die durch eine zu hohe Konzentration der Kaliumverbindung zu Ausfällungen oder Schädigung des Lösungsmittels durch eine zu hohe Konzentration an Oxidationsmittel führen. In einer vorteilhaften Ausgestaltung werden deshalb das Oxidationsmittel und die Kaliumverbindung vor dem Einbringen in das verunreinigte Lösungsmittel miteinander vermischt. Durch das Vermischen vor dem Einbringen in das Lösungsmittel ist eine schnelle homogene Verteilung zu erreichen.

Vorteilhafterweise wird als Oxidationsmittel Wasserstoffperoxid oder Ozon verwendet. Grundsätzlich kann auch Sauerstoff verwendet werden. Wasserstoffperoxid oder Ozon besitzen jedoch den Vorteil, dass sie eine ausreichende Aktivität bzw. ein ausreichendes Oxidationspotential haben, um Sulfit zu oxidieren, ohne dass das Lösungsmittel geschädigt wird.

Eine besondere Ausgestaltung des Verfahrens sieht vor, dass die Menge an zugeführter Kaliumverbindung äquimolar ist zu der Menge an kristallisiertem Kaliumsulfat. Dadurch wird für den Kristallisationsprozess immer ausrechend Kalium zugeführt. Es kann jedoch hingegen auch von Vorteil sein, eine überstöchiometrische Menge an Kaliumverbindung hinzuzugeben, um einen Puffer für den Kristallisationsprozess zu schaffen.

In einer vorteilhaften Weiterentwicklung des Verfahrens wird das aufbereitete Lösungsmittel mit dem verunreinigten Lösungsmittel im Wärmetausch geführt, wodurch das verunreinigte Lösungsmittel durch das aufbereitete Lösungsmittel gekühlt wird. Dies ermöglicht eine Wärmerückgewinnung.

Das Verfahren kann eigenständig eingesetzt werden, wobei das verunreinigte Lösungsmittel aus Tanks bezogen wird und das aufbereitete Lösungsmittel ebenfalls in Tanks bereitgestellt wird. Vorteilhafterweise kann das Verfahren aber auch in einen Kraftwerksprozess integriert und an einem Kohlendioxid-Abscheideprozess angeschlossen sein, sodass das verunreinigte Lösungsmittel direkt aus dem Kreislauf des Kohlendioxid-Abscheideprozess entnommen wird.

Das Verfahren eignet sich vorteilhaft für die Aufbereitung von Aminosäuresalzlösungen sowie auch von Amin-Lösungen. Da für Aminosäuresalzlösungen keine destillative Aufbereitung möglich ist, wird durch das Verfahren erstmals eine Möglichkeit einer effektiven und energetisch vertretbaren Lösung angegeben.

Neben den energetischen Vorteilen ergeben sich für die Aufbereitung von Amin-Lösungen weitere Vorteile insbesondere bei der Feinreinigung. Durch Destillation ist lediglich ein Teil der Amine aus der Lösung und somit von den Verunreinigungen abtrennbar. Ein erheblicher Teil verbleibt in der Sumpflösung. Durch das erfindungsgemäße Verfahren kann diese Sumpflösung weiter aufbereitet werden, wodurch sich ein Großteil der Amine wiedergewinnen lassen.

Folgend werden Ausführungsbeispiele der Erfindung anhand von beigefügten schematischen Zeichnungen näher erläutert. Es zeigt:
- FIG 1: ein Verfahren nach dem Stand der Technik zum Aufbereiten einer verunreinigten alkalischen KaliumAminosäuresalzlösung,
- FIG 2: eine erfindungsgemäße Weiterentwicklung des in FIG 1 gezeigten Verfahrens mit einem zusätzlichen Mischprozess,
- FIG 3: eine Vorrichtung zur Aufbereitung eines verunreinigten Absorptionsmittels für Kohlendioxid.

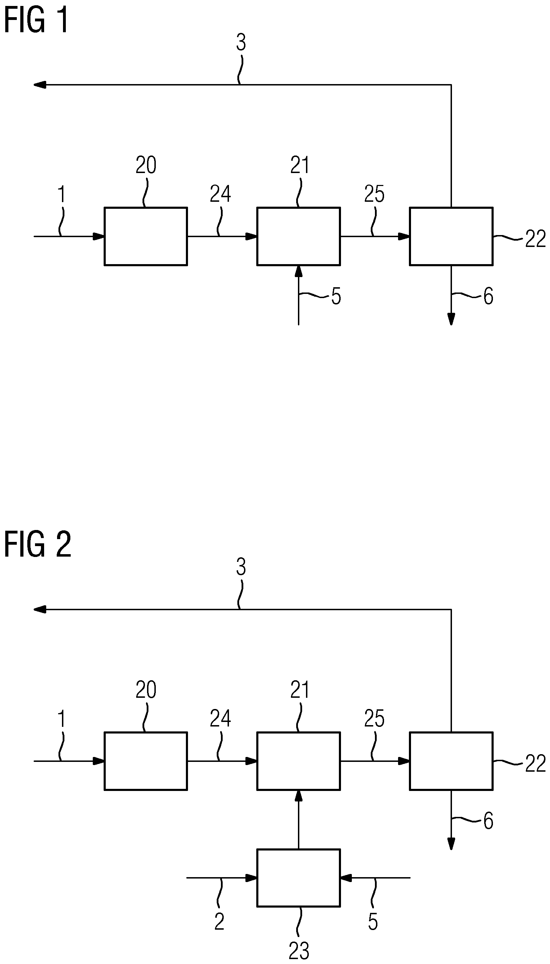

FIG 1 zeigt ein Verfahren nach dem Stand der Technik anhand von drei aufeinander folgenden Verfahrensschritten.

In einem ersten Verfahrensschritt 20 wird eine mit Sulfit und Sulfat verunreinigte Kalium-Aminosäuresalzlösung 1 zugeführt und abgekühlt. Durch das Abkühlen sinkt die Löslichkeit von Kaliumsulfat unter die gegebene Kaliumsulfat-Konzentration, sodass Kaliumsulfat auskristallisiert, und eine erste Suspension 24 aus verunreinigtem Lösungsmittel 1 und Kaliumsulfat gebildet wird, die einem zweiten Verfahrensschritt 21 zugeführt wird.

In dem zweiten Verfahrenschritt 21 wird in das verunreinigte Lösungsmittel 1 eine Kaliumverbindung 5 eingebracht, die den durch die Kaliumsulfat-Kristallisation hervorgerufenen Kaliumverlust des Lösungsmittels ausgleicht. Die im zweiten Verfahrensschritt entstandene Suspension 25 wird einem dritten Verfahrensschritt 22 zugeführt.

In dem dritten Verfahrenschritt 22 wird die Suspension 25 filtriert, wobei Kaliumsulfat 6 abgetrennt wird, und ein aufbereitetes Lösungsmittel 3 gebildet wird.

FIG 2 zeigt eine erste Ausführungsform des erfindungsgemäßen Verfahrens. In Erweiterung zu FIG 1 wird dem zweiten Verfahrenschritt 21 neben der Kaliumverbindung 5 ein Oxidationsmittel 2 zugeführt. Dazu ist ein Mischprozess 23 vorgesehen, in den das Oxidationsmittel 2 und die Kaliumverbindung 5 eingebracht und vermischt werden, und dann vermischt in den zweiten Verfahrenschritt 21 eingebracht werden.

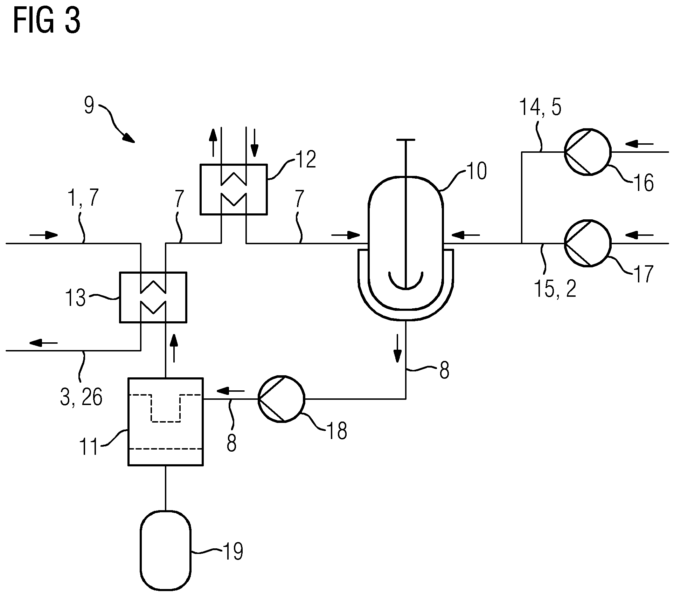

FIG 3 zeigt eine Vorrichtung 9 zur Aufbereitung eines verunreinigten Lösungsmittels 1 für Kohlendioxid. Die Vorrichtung 9 umfasst im Wesentlichen einen Kristallisationsreaktor 10, einen Filter 11, einen Kühler 12, und einen Wärmetauscher 13.

Der Kristallisationsreaktor 10 weist eine Zuführleitung 7 für ein verunreinigtes Lösungsmittel 1 auf. In die Zuführleitung 7 sind der Wärmetauscher 13 und der Kühler 12 geschaltet. An den Kristallisationsreaktor 10 ist zudem eine Zuführleitung 14 für die Zuführung einer Kaliumverbindung 5 und eine Zuführleitung 15 für die Zuführung eines Oxidationsmittels 2 angeschlossen. In die Zuführleitung 14 ist eine erste Regelpumpe 16 und in die Zuführleitung 15 eine zweite Regelpumpe 17 geschaltet. Die Zuführleitung 15 ist dabei optional.

Ausleitend ist der Kristallisationsreaktor 10 über eine Suspensionsleitung 8 mit dem Filter 11 verbunden. In die Suspensionsleitung 8 ist eine Förderpumpe 18 geschaltet.

Zur Ausleitung eines kristallinen Feststoffes, ist dem Filter ein Behälter 19 nachgeschaltet. Zur Ausleitung eines aufbereiteten Lösungsmittels 3 ist an den Filter 11 eine Leitung 26 angeschlossen, die in den Wärmetauscher 13 geschaltet ist. Durch den Wärmetauscher 13 ist somit Wärme von dem verunreinigten Lösungsmittel 1 auf das aufbereitete Lösungsmittel 3 übertragbar.

Der Wärmetauscher 13 ist optional, und insbesondere bei direkter Integration der Vorrichtung 9 in eine Kohlendioxid-Abscheidevorrichtung von Vorteil.

Obwohl die Erfindung im Detail durch das bevorzugte Ausführungsbeispiel näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Aufbereiten eines aminbasierten, durch den Eintrag von Schwefeloxiden verunreinigten Lösungsmittels (1), bei dem
- in das verunreinigte Lösungsmittel (1) eine Kaliumverbindung eingebracht wird, und das verunreinigte Lösungsmittel (1) auf eine Temperatur T abgekühlt wird, sodass die Löslichkeit des Kaliumsulfats geringer wird, als die gegebene Konzentration des Kaliumsulfat, und
- das Kaliumsulfat abfiltriert wird, wobei ein aufbereitetes Lösungsmittel (3) gebildet wird,
**dadurch gekennzeichnet, dass**
bei dem in das verunreinigte Lösungsmittel (1) ein Oxidationsmittel (2) eingebracht wird, sodass Sulfit zu Sulfat oxidiert wird.

2. Verfahren nach Anspruch 1, bei dem als Oxidationsmittel (2) Wasserstoffperoxid oder Ozon verwendet wird.

3. Verfahren nach einem der Ansprüche 1 bis 2, bei dem die Menge an zugeführter Kaliumverbindung äquimolar ist zu der Menge an kristallisiertem Kaliumsulfat.

4. Verfahren nach einem der Ansprüche 1 bis 3, bei dem die Temperatur T des verunreinigten Lösungsmittels (1) nach Abkühlung zwischen 5°C und 45°C liegt.

5. Verfahren nach einem der Ansprüche 1 bis 4, bei dem das aufbereitete Lösungsmittel (3) mit dem verunreinigten Lösungsmittel (1) im Wärmetausch geführt wird, wodurch das verunreinigte Lösungsmittel (1) durch das aufbereitete Lösungsmittel (3) gekühlt wird.

6. Verfahren nach einem der Ansprüche 1 bis 5, wobei das verunreinigte Lösungsmittel (1) aus einem Kohlendioxid-Abscheideprozess (4) eines fossil befeuerten Kraftwerksprozesses stammt.

7. verfahren nach Anspruch 6, bei dem das verunreinigte Lösungsmittel (1) aus dem Kohlendioxid-Abscheideprozess (4) chargenweise aufbereitet wird.

8. Verfahren nach einem der Ansprüche 1 bis 7, wobei das verunreinigte Lösungsmittel (1) eine Aminosäuresalzlösung ist.

9. Verfahren nach einem der Ansprüche 1 bis 7, wobei das verunreinigte Lösungsmittel (1) ein oder mehrere Amine sind.

10. Verfahrens nach einem der Ansprüche 1 bis 9 bei dem die Kaliumverbindung Kaliumhydroxid KOH, Kaliumhydrogencarbonat oder Kaliumcarbonat ist.

11. Verfahren nach Anspruch 8, bei dem das Oxidationsmittel (2) und die Kaliumverbindung vor dem Einbringen in die Aminosäuresalzlösung miteinander vermischt werden.

## Claims

1. Method for processing an amine-based solvent contaminated by the introduction of sulfur oxides (1), in which
- a potassium compound is introduced into the contaminated solvent (1), and the contaminated solvent (1) is cooled to a temperature T, so that the solubility of the potassium sulfate becomes less than the specified concentration of potassium sulfate, and
- the potassium sulfate is filtered off, with formation of a prepared solvent (3),
**characterized in that** an oxidizing agent (2) is introduced into the contaminated solvent (1), so that sulfite is oxidized to sulfate.

2. Method according to Claim 1, wherein hydrogen peroxide or ozone is used as oxidizing agent (2).

3. Method according to one of Claims 1 to 2, wherein the amount of potassium compound supplied is equimolar to the amount of crystallized potassium sulfate.

4. Method according to one of Claims 1 to 3, wherein the temperature T of the contaminated solvent (1) after cooling is between 5°C and 45°C.

5. Method according to one of Claims 1 to 4, wherein heat exchange is provided between the prepared solvent (3) and the contaminated solvent (1), so that the contaminated solvent (1) is cooled by the prepared solvent (3).

6. Method according to one of Claims 1 to 5, wherein the contaminated solvent (1) is obtained from a carbon dioxide-separating process (4) of a fossil-fuel-fired power station process.

7. Method according to Claim 6, wherein the contaminated solvent (1) is processed batchwise from the carbon dioxide-separating process (4).

8. Method according to one of Claims 1 to 7, wherein the contaminated solvent (1) is an amino acid salt solution.

9. Method according to one of Claims 1 to 7, wherein the contaminated solvent (1) comprises one or more amines.

10. Method according to one of Claims 1 to 9, wherein the potassium compound is potassium hydroxide KOH, potassium hydrogen carbonate or potassium carbonate.

11. Method according to Claim 8, wherein the oxidizing agent (2) and the potassium compound are mixed together before they are introduced into the amino acid salt solution.

## Revendications

1. Procédé de traitement d'un solvant (1) à base d'amine et souillé par des oxydes de soufre, dans lequel
- on introduit un composé du potassium dans le solvant (1) souillé et on refroidit le solvant (1) souillé à une température T, de manière à ce que la solubilité du sulfate de potassium soit plus petite que la concentration donnée du sulfate de potassium et
- on sépare le sulfate de potassium par filtration, en formant un solvant (3) traité,
**caractérisé en ce que**
on introduit un agent (2) d'oxydation dans le solvant (1) souillé de manière à oxyder du sulfite en sulfate.

2. Procédé suivant la revendication 1,
dans lequel
on utilise du peroxyde d'hydrogène ou de l'ozone comme agent (2) d'oxydation.

3. Procédé suivant l'une des revendications 1 à 2,
dans lequel
la quantité de composé du potassium ajoutée est équimolaire à la quantité de sulfate de potassium cristallisé.

4. Procédé suivant l'une des revendications 1 à 3,
dans lequel
la température T du solvant (1) souillé est, après refroidissement, comprise entre 5°C et 45°C.

5. Procédé suivant l'une des revendications 1 à 4,
dans lequel
on fait en sorte que le solvant (3) traité échange de la chaleur avec le solvant (1) souillé, en refroidissant ainsi le solvant (1) souillé par le solvant (3) traité.

6. Procédé suivant l'une des revendications 1 à 5,
dans lequel
le solvant (1) souillé provient d'une opération (4) de séparation du dioxyde de carbone d'une centrale électrique à combustible fossile.

7. Procédé suivant la revendication 6,
dans lequel
on traite, charge par charge, le solvant (1) souillé provenant de l'opération (4) de séparation du dioxyde de carbone.

8. Procédé suivant l'une des revendications 1 à 7,
dans lequel
le solvant (1) souillé est une solution de sel d'acide aminé.

9. Procédé suivant l'une des revendications 1 à 7,
dans lequel
le solvant (1) souillé est une amine ou plusieurs amines.

10. Procédé suivant l'une des revendications 1 à 9,
dans lequel
le composé du potassium est l'hydroxyde de potassium KOH, le bicarbonate de potassium ou le carbonate de potassium.

11. Procédé suivant LA revendication 8,
dans lequel
on mélange l'agent (2) d'oxydation et le composé du potassium entre eux, avant de les introduire dans la solution de sel d'acide aminé.
